(19) **Europäisches Patentamt / European Patent Office / Office européen des brevets**

(11) **EP 4 468 719 B1**

(12) **EUROPEAN PATENT SPECIFICATION**

(45) Date of publication and mention
of the grant of the patent:
**13.05.2026 Bulletin 2026/20**

(21) Application number: **23742871.9**

(22) Date of filing: **17.01.2023**

(51) International Patent Classification (IPC):
**H04N 21/44** *(2011.01)*

(52) Cooperative Patent Classification (CPC):
**H04N 21/8547; B60R 1/27; H04N 5/2624;
H04N 5/2625; H04N 21/41422; H04N 21/4223;
H04N 21/44008; H04N 21/44016; H04N 23/90**

(86) International application number:
**PCT/CN2023/072528**

(87) International publication number:
**WO 2023/138556 (27.07.2023 Gazette 2023/30)**

(54) **VIDEO GENERATION METHOD AND APPARATUS BASED ON MULTIPLE VEHICLE-MOUNTED CAMERAS, AND VEHICLE-MOUNTED DEVICE**

**VIDEOERZEUGUNGSVERFAHREN UND -VORRICHTUNG AUF BASIS MEHRERER FAHRZEUGMONTIERTER KAMERAS UND FAHRZEUGMONTIERTE VORRICHTUNG**

**PROCÉDÉ ET APPAREIL DE GÉNÉRATION DE VIDÉO BASÉS SUR DE MULTIPLES CAMÉRAS MONTÉES SUR VÉHICULE, ET DISPOSITIF MONTÉ SUR VÉHICULE**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.01.2022 CN 202210055793**

(43) Date of publication of application:
**27.11.2024 Bulletin 2024/48**

(73) Proprietor: **Great Wall Motor Company Limited
Hebei 071000 (CN)**

(72) Inventors:
• **LUO, Yuanqing**
  **Baoding, Hebei 071000 (CN)**
• **CHEN, Xianling**
  **Baoding, Hebei 071000 (CN)**
• **ZHAO, Long**
  **Baoding, Hebei 071000 (CN)**
• **TU, Huixun**
  **Baoding, Hebei 071000 (CN)**
• **XIE, Yi**
  **Baoding, Hebei 071000 (CN)**
• **WANG, Guangfu**
  **Baoding, Hebei 071000 (CN)**
• **YE, Nianjin**
  **Baoding, Hebei 071000 (CN)**

(74) Representative: **Klunker IP
Patentanwälte PartG mbB
Lessingstraße 11
80336 München (DE)**

(56) References cited:
CN-A- 103 986 918     CN-A- 105 163 085
CN-A- 107 197 207     CN-A- 110 060 215
CN-A- 110 493 542     CN-A- 112 445 395
CN-A- 113 727 073     CN-A- 115 119 045
JP-A- 2014 033 469     US-A1- 2014 354 816

## Description

### TECHINICAL FIELD

The present invention pertains to the field of intelligent vehicle technology, particularly to a method for video generation based on on-board multi-camera, a piece of on-board equipment, a computer-readable storage medium, and computer program product.

### BACKGROUND

In the field of intelligent vehicles, cameras installed on vehicles enable video capture functionalities, which provides the possibility for the application of one-click video creation technology in this domain. However, the current one-click video creation technologies mainly focus on video data collected by a single camera. Since a vehicle may be equipped with multiple cameras, each capturing different video data, the current one-click video creation technologies are not suitable for vehicular scenarios.

US 2014/354816 A1 discloses, for the sake of improving the safety at the time of traveling at dump truck by displaying an image corresponding to the traveling direction of the dump truck, cameras having the field of visions at least rear side, left side and right side of the dump truck, respectively, a monitor disposed in an operator's cab of the dump truck, the operator's cab further comprises a shift lever for operating the forward and rearward traveling direction, a vehicle controller and a display controller is also provided for displaying one or plurality of camera image on the monitor in accordance with the traveling direction of the dump truck, on the basis of steering information of left or right traveling direction of the dump truck and information from the shift lever.

### TECHNICAL PROBLEM

One of the objectives of the present invention is to provide a method for video generation based on on-board multi-camera, and a piece of on-board equipment, a computer-readable storage medium, and computer program product which can process video data collected by multiple on-board cameras to create new videos, and realize the application of one-click video creation technology in vehicular scenarios.

### TECHNICAL SOLUTION

The object is achieved with the features of independent claim 1 regarding the method for video generation based on on-board multi-camera, and with the features of claim 13 regarding the piece of on-board equipment, and with the features of claim 14 regarding the computer-readable storage medium, and with the features of claim 15 regarding the computer program product. Further embodiments are defined in the dependent claims.

### BENEFICAL EFFECTS

The method for video generation based on on-board multi-camera provided by the present invention has the following beneficial effects: the on-board equipment can extract one or more video sequences to be processed from the video data of each orientation by obtaining the video data collected separately by multiple on-board cameras installed in different orientations on a vehicle. After determining display areas of the video data from each orientation in a target video to be generated, the on-board equipment can combine multiple video sequences from various orientations based on the display areas to generate the target video. Based on the positional relationship of the on-board cameras, the embodiments of the present invention can combine video data collected by multiple vehicle cameras into a new target video, which addresses the issue of current one-click video creation technologies being inapplicable to the on-board multi-camera scenarios, and achieves one-click video creation for video data from multiple on-board cameras in vehicular scenarios. Meanwhile, the target video generated based on the different orientations of multiple on-board cameras can offer more perspectives, can form more combination schemes and special effects, and can make the target video obtained by one-click video creation more attractive.

### DESCRIPTION OF DRAWINGS

To illustrate the technical solutions of the present invention more clearly, the following is a brief introduction of the drawings .

    FIG. 1 is a schematic diagram of a processing flow of a one-click video creation in the existing technologies;
    FIG. 2 is a schematic diagram of a method for video generation based on on-board multi-camera;
    FIG. 3 is a schematic diagram of a processing flow of the method for video generation based on on-board multi-camera;
    FIG. 4 is a schematic diagram illustrating an implementation of step S202 in the method for video generation based on on-board multi-camera;
    FIG. 5 is a schematic diagram illustrating an implementation of step S2021 in the method for video generation based on on-board multi-camera;
    FIG. 6 is a schematic diagram illustrating an example of determining a main camera;
    FIG. 7 is a schematic diagram showing a main video sequence;
    FIG. 8 is a schematic diagram illustrating an implementation of step S2023 in the method for video generation based on on-board multi-camera;
    FIG. 9 is a schematic diagram showing video data marked with a timestamp sequence;

FIG. 10 is a schematic diagram of a video template;

FIG. 11 is a schematic diagram of a device for video generation based on on-board multi-camera; and

FIG. 12 is a schematic diagram of a piece of on-board equipment.

## DETAILED DESCRIPTION

To make the objectives, technical solutions, and advantages of the present invention more comprehensible and clearer, detailed explanations are further provided below in conjunction with the drawings. It should be understood that the specifics described herein are intended only to explain the invention and are not intended to limit the present invention which is defined in the claims.

It should be noted that when a component is described as being "fixed to" or "disposed on" another component, it may be directly or indirectly on the other component. When a component is described as being "connected to" another component, it may be directly or indirectly connected to the other component. The terms "upper," "lower," "left," "right," etc., indicating orientation or positional relationships are based on the orientations or positions shown in the drawings, merely for convenience of description, and are not intended to indicate or imply specific orientations or constructions of the described devices or elements, and thus should not be construed as limitations of the present invention. For persons skilled in the art, the specific meanings of these terms can be understood based on specific circumstances. The terms "first," "second," etc., are used only for descriptive purposes and should not be construed as indicating relative importance or implicitly specifying the number of features. The word "multiple" means two or more unless otherwise expressly specified.

One-click video creation refers to a technology where videos or images to be edited are imported with one click, and the key frames are extracted or the key images are selected through an algorithm according to a preset template to synthesize a new video in combination with effects, transitions, filters, music, and other conditions. One-click video creation can automatically complete video or image editing without user operations, which significantly saves the time for video and picture editing.

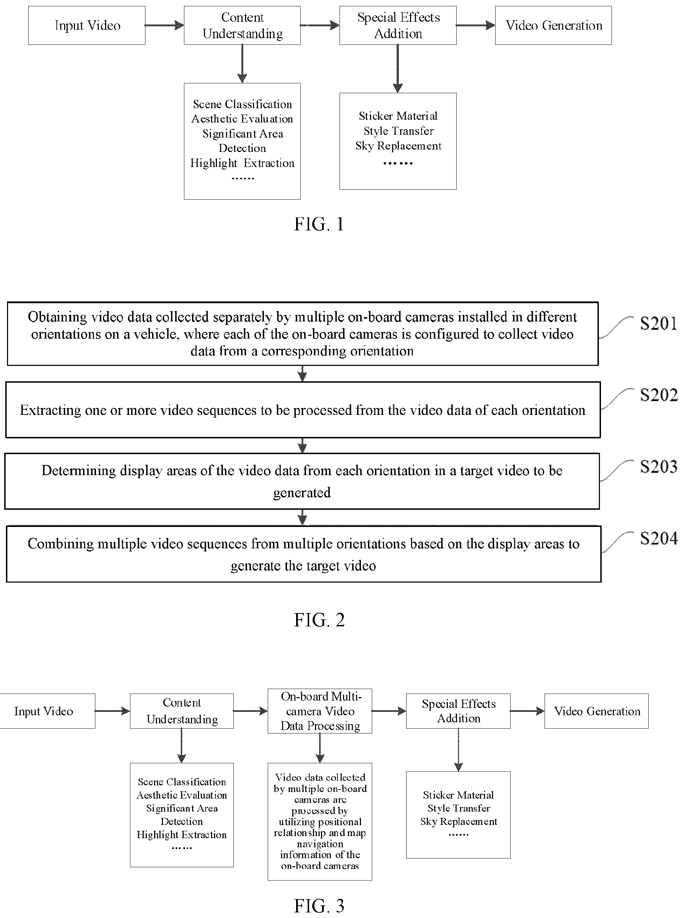

As shown in FIG. 1, which is a schematic diagram of a processing flow of a one-click video creation in the existing technologies. According to the processing flow shown in FIG. 1, for the input video, the vehicle system mainly adopts a visual algorithm to realize the content understanding, so as to extract the key frames in the video, such as, classifying scenes involved in the video, performing aesthetic evaluations, detecting significant areas, discovering and extracting highlights, etc. On this basis, special effects are added through processes such as sticker material invention, style transfer, and sky replacement, and then a final new video is created. However, this method is not suitable to vehicles equipped with multiple cameras. In view of this, the present invention provides the method for video generation based on on-board multi-camera provided, which can perform one-click video creation operations on video data captured by multiple on-board cameras to enhance video generation efficiency.

The following provides a detailed explanation of the technical solutions of the present invention.

Referring to FIG. 2, which illustrates a method for video generation based on on-board multi-camera provided by the present invention, the method particularly includes the following steps S201 to S204:

S201: Obtaining video data captured separately by multiple on-board cameras installed in different orientations on a vehicle, where each of the on-board cameras is configured to capture video data from a corresponding orientation.

This method may be applied to on-board equipment, and the on-board equipment may be electronic devices installed in various types or models of vehicles capable of processing video data. For example, the on-board equipment may be an on-board computer, an on-board video processing device, etc., specific types of on-board equipment are not limited.

The vehicle may be provided with multiple on-board cameras, and the multiple on-board cameras may be installed in different orientations on the vehicle. Each on-board camera is capable of capturing video at its respective orientation, resulting in video data from that orientation during a driving process of the vehicle. Particularly, the multiple on-board cameras may include on-board camera(s) installed on an outer side of the vehicle as well as on-board camera(s) installed on an inner side of the vehicle. Herein, the on-board camera(s) installed on the outer side of the vehicle may capture external scenes during driving, and the on-board camera(s) installed on the inner side of the vehicle may capture the driver and passengers, to obtain corresponding video data.

For example, multiple on-board cameras may be respectively installed at the front, left front, right front, rear, left rear, right rear, left side, and right side of the vehicle. Herein, the on-board camera installed at the front of the vehicle may capture video of the scene in front of the vehicle during driving, and this video may be the same as what the driver and passenger actually see. Similarly, the on-board camera installed on the right side of the vehicle may capture video of the scene to the right side of the vehicle during driving, and this video may be the same as what the driver and passenger actually see to the right.

During the driving process of the vehicle, the on-board cameras in various orientations may be all in working condition to capture videos of the scenes from various orientations, resulting in video data from those orientations. The on-board equipment, when processing the video data collected separately by the multiple on-board cameras into a single video, may first obtain the corresponding video data from these on-board cameras.

S202: Extracting one or more video sequences to be processed from the video data of each orientation.

The on-board equipment, when processing video data captured by multiple on-board cameras into a single video, may retain only the more critical video content from each orientation. These video contents may be composed of key video frames from their respective orientations. Thus, the on-board equipment, after obtaining the video data from each orientation, may extract video sequences from video data of each orientation, and these video sequences are the video sequences to be processed into a new video.

It should be noted that, the on-board equipment, when extracting video sequences from the video data captured by each on-board camera in the corresponding orientation, may extract one or more video sequences from the video data of each orientation. The number of video sequences extracted by the on-board equipment from each video data captured by the on-board cameras from various orientations may be equal or may be different.

In the step S202, the on-board equipment, when extracting one or more video sequences to be processed from the video data of each of the orientations respectively, may first perform content understanding on the video data.

As shown in FIG. 3, which illustrates a process flow of the method for video generation based on on-board multi-camera provided by the present invention. Unlike the existing one-click video creation process shown in FIG. 1, the input video in this method is the video data captured from different orientations of the vehicle by various on-board cameras. For content understanding of the input video, the on-board equipment may use methods similar to those in existing technologies, such as scene classification, aesthetic evaluation, detection of significant areas, discovery of highlights, etc. Subsequently, the on-board equipment may process the video data captured by the multiple on-board cameras, extract key frames or highlights from various video data to form the to-be-processed video sequences.

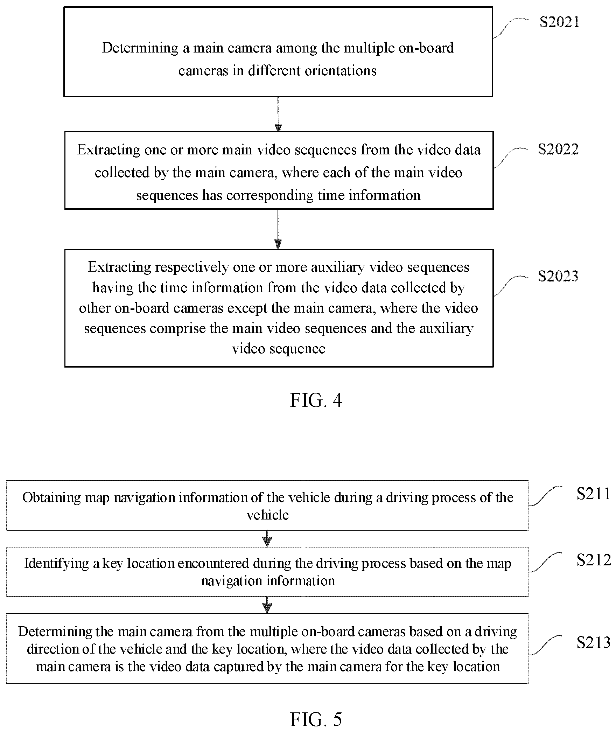

As shown in FIG. 4, the step S202 of extracting one or more video sequences to be processed from the video data of each of the orientations respectively includes the following sub-steps S2021-S2023.

S2021: Determining a main camera among the multiple on-board cameras in different orientations.

The on-board equipment may determine the main camera from multiple on-board cameras based on a driver or passenger's selection. For example, the driver may operate the on-board equipment to preselect the on-board camera installed at the front of the vehicle as the main camera. Consequently, the on-board camera in the front of the vehicle will be correspondingly set by the on-board equipment as the main camera based on the driver or passenger's selection.

Alternatively, the on-board equipment may dynamically determine the main camera based on actual video contents captured by various on-board cameras. By dynamically determining the main camera, different on-board cameras may serve as the main camera over a continuous period of time. Since each on-board camera captures video from a different orientation, a main video sequence extracted from the main camera will also contain video contents in different orientations. This further enhances the diversity of the final generated target video created using the one-click video creation technique, and improves the interest of the target video.

As shown in FIG. 5, the step S2021 of determining the main camera from multiple on-board cameras includes the following sub-steps S211-S213:

S211: Obtaining map navigation information of the vehicle during a driving process.

The map navigation information may indicate a driving route and direction of the vehicle during the driving process.

S212: Identifying a key location encountered during the driving process based on the map navigation information.

Generally, the map navigation information includes not only the driving route and direction but also multiple key locations along the route. The various key locations may be identified by the on-board equipment based on the map navigation information.

The key locations may be the locations of famous landmarks, commercial districts, and iconic buildings. The on-board cameras may capture video clips at and near these key locations to obtain exciting footage.

S213: Determining the main camera from multiple on-board cameras based on a driving direction of the vehicle and the key location, where the video data collected by the main camera will be the video data captured by the main camera for the key location.

As shown in FIG. 3, the on-board equipment may process the video data collected by the multiple on-board cameras using positional relationships of these multiple on-board cameras and the map navigation information. For example, the on-board equipment may determine the main camera from multiple on-board cameras based on the vehicle's driving direction and the key locations identified according to the map navigation information. Since the key locations are marked in the map navigation information, the accuracy of determining the main camera can be improved by combining the map navigation information to determine the main camera, ensuring that the video data collected by the main camera is related to key location points as much as possible, which helps the final generated target video to retain the interesting content during the driving process of the vehicle to the maximum extent and enhances the viewability of the target video.

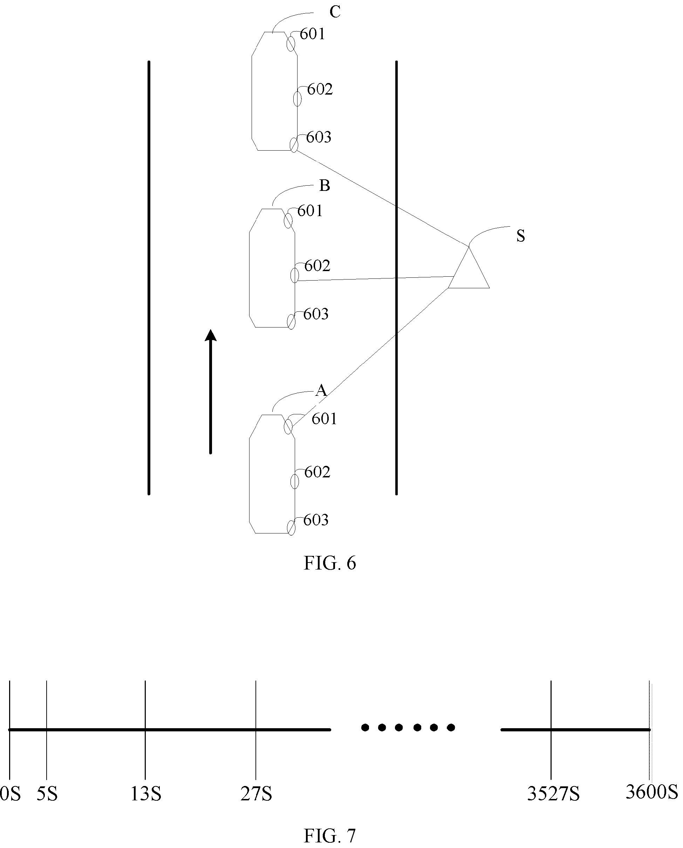

As shown in FIG. 6, which illustrates an example of determining the main camera. The on-board cameras installed on the vehicle include on-board cameras 601, 602, and 603. Herein, the on-board camera 601 is installed at the front right of the vehicle, the on-board camera 602 is installed on the right side of the vehicle, and the on-board camera 603 is installed at the rear right of the vehicle. As the vehicle travels on the road, it passes through points A, B, and C, moving from point A towards point C. Point S in FIG. 6 represents a key location. For example, point S represents the location of a famous landmark.

The on-board equipment may dynamically determine the main camera from multiple on-board cameras based on the vehicle's driving direction and the key location S. For example, when the vehicle is at point A, the on-board equipment may identify the upcoming key location S according to the map navigation information. At this point, video data captured by the on-board camera 601 installed at the front right of the vehicle includes content related to the key location S. Thus, the on-board camera 601 may be set by the on-board equipment as the current main camera. As the vehicle continues to travel and reaches point B, the key location S is on the right side of the vehicle. At this point, video data captured by the on-board camera 602 installed at the right side of the vehicle includes content related to key location S. Thus, the on-board camera 602 may be set by the on-board equipment as the current main camera. Then, when the vehicle reaches point C, key location S is at the rear right of the vehicle. At this point, video data captured by the on-board camera 603 installed at the rear right of the vehicle includes content related to key location S. Thus, the on-board camera 603 may be set by the on-board equipment as the current main camera. By dynamically determining the main camera, it can be ensured that the video data collected by the main camera is the video data captured for the key locations.

S2022: Extracting one or more main video sequences from the video data collected by the main camera, where each main video sequence has corresponding time information.

After determining the main camera, the one or more main video sequences may be extracted by identifying the exciting segments within the video data captured by the main camera. Each main video sequence may have corresponding time information.

As shown in FIG. 7 which is a schematic diagram of a main video sequence. The video data shown in FIG. 7 may be the video data captured by the main camera, the video data has a duration of 60 minutes (min), or 3600 seconds (s). The segments from 0-5s, 13-27s, ..., 3527-3600s are the exciting segments within this video data. These exciting segments collectively form multiple main video sequences from the video data captured by the main camera. The exciting segments in the video data may be used as segments in the target video generated by the subsequent one-click video creation. The exciting segments captured by the main camera may be non-continuous video sequences over multiple periods of time. By extracting these video sequences corresponding to the exciting segments, the proportion of non-exciting segments in the target video can be reduced, the data volume of the target video can be decreased, and the storage space required for the target video can be reduced, which is conducive to the dissemination and sharing of the target video.

S2023: Extracting respectively one or more auxiliary video sequences having the time information from the video data collected by other on-board cameras except the main camera.

Herein, the video sequences include main video sequences and auxiliary video sequences.

For each of the other on-board cameras except the main camera, the on-board equipment may extract one or more auxiliary video sequences having the time information shown in FIG. 7 from their respective video data.

Generally, during the driving process of the vehicle, all on-board cameras start working simultaneously, and the duration of the video data collected by each on-board camera should be equal or approximately equal. For example, the duration of the video data collected by each of the on-board cameras, including the main camera, may be 60 minutes.

Thus, the on-board equipment, after extracting one or more main video sequences having time information from the video data collected by the main camera, may also extract video sequences having the same time information from the video data collected by other on-board cameras. Based on the time information of the main video sequences, auxiliary video sequences matching the main video sequences can be quickly and accurately extracted from the video data collected by other on-board cameras, which ensures time synchronization for each frame of the target video generated by one-click video creation and enhances the authenticity of the target video.

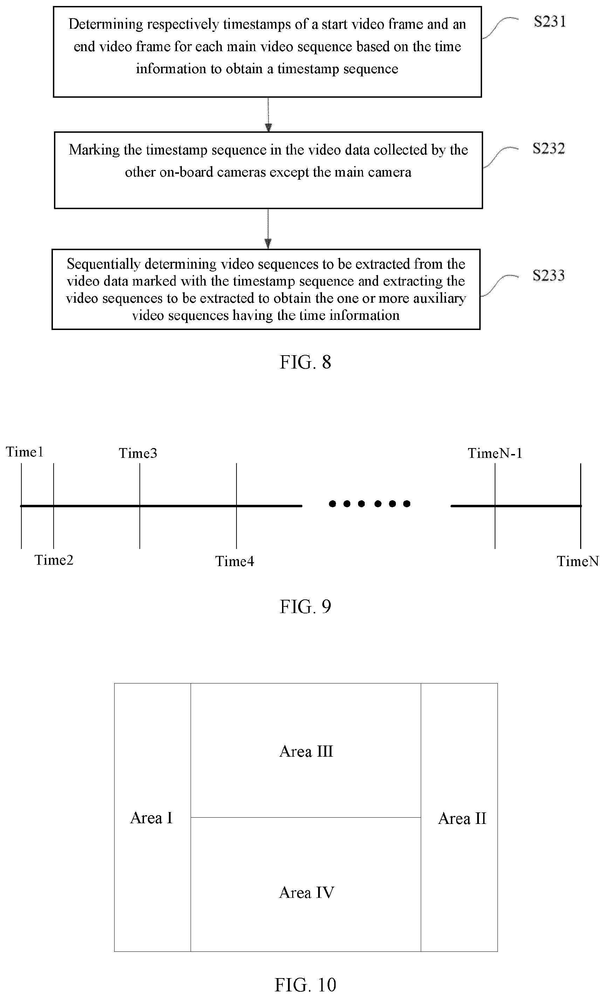

As shown in FIG. 8, the step S2023 of extracting respectively one or more auxiliary video sequences having the time information from the video data collected by the other on-board cameras except the main camera may include the following sub-steps S231-S233:

S231: Determining respectively timestamps of a start video frame and an end video frame for each main video sequence based on the time information to obtain a timestamp sequence.

Based on the time information of the main video sequences, the timestamps of the start video frame and the end video frame for each main video sequence can be determined. For example, the main video sequence corresponding to 0-5s in FIG. 7 may be processed first, where the start video frame is a video frame at 0 second corresponds to a timestamp assumed to be Time1, and the end video frame is a video frame at the 5-th second corresponds to a timestamp assumed to be Time2. Then, the main video sequence corresponding to a time period from the 13-th to the 27-th second in FIG. 7 may be processed, where the start video frame is a video frame at 13s corresponds to a timestamp assumed to be Time3; the end video frame is a video frame at the 27-th second corresponds to a timestamp assumed to be Time4. By processing all the main video sequences, a timestamp sequence can be obtained, i.e., {Time1, Time2, Time3, Time4, ..., TimeN}.

S232: Marking the timestamp sequence in the video data collected by each of the other on-board cameras except the main camera.

Then, the timestamp sequence may be marked in the video data collected by each of the other on-board cameras, i.e., the video frames corresponding to various timestamps {Time1, Time2, Time3, Time4, ..., TimeN} in the video data collected by each of the other on-board cameras are marked.

S233: Sequentially determining video sequences to be extracted from the video data marked with the timestamp sequence and extracting the video sequences to be extracted to obtain the one or more auxiliary video sequences having the time information.

As shown in FIG. 9, which is a schematic diagram showing video data marked with a timestamp sequence. The video sequence formed by the video frames between Time1 and Time2 have the same time information as the main video sequence from 0 to the 5-th second shown in FIG. 7. The video sequence formed by the video frames between Time3 and Time4 have the same time information as the main video sequence from the 13-th to 27-th second shown in FIG. 7. Thus, when extracting video sequences from the video data shown in FIG. 9, the video sequence formed by the video frames between Time1 and Time2, the video sequence formed by the video frames between Time3 and Time4, may be sequentially extracted until all the video sequences are extracted from the video data. Since the timestamp sequence is generated based on the time information of the main video sequence, by extracting video sequences from the video data of other on-board cameras according to the timestamp sequence, can ensure that the extracted video sequences are consistent with the main video sequence in terms of time. Additionally, the on-board equipment can store these video sequences directly in the order these video sequences are extracted, reducing the complexity of processing these video sequences.

S203: Determining display areas of the video data from each orientation in a target video to be generated.

The target video to be generated refers to the video ultimately generated by one-click video creation. Determining the display areas of the video data from each orientation in the target video means determining where the video sequences extracted from each on-board camera should be displayed in the target video.

The display area of the video data from each orientation in the target video may be determined based on a video template. Particularly, the on-board equipment may receive the video template selected for the target video to be generated. That is, the driver or passenger may select any video template from multiple video templates based on actual needs or preferences. Each video template may include multiple template areas, and any template area may have a binding relationship with the on-board cameras in different orientations. The on-board equipment may determine the display area of the video data from each orientation in the target video based on the binding relationship between the on-board camera at each orientation and the template areas.

For example, as shown in FIG. 10, which is a schematic diagram of a video template. The video template selected by the driver or passenger may include four template areas: area I, area II, area II, and area IV. Area I may have a binding relationship with the on-board camera on the left side of the vehicle; area II may have a binding relationship with the on-board camera on the right side of the vehicle; area III may have a binding relationship with the on-board camera at the front of vehicle; and area IV may have a binding relationship with the on-board camera at the rear of the vehicle. Thus, after selecting the video template shown in FIG. 10, the new video ultimately generated by the one-click video creation will also include four display areas corresponding to the four template areas in the video template shown in FIG. 10. Each display area is used to display the video data captured by the on-board camera with which the corresponding area has a binding relationship.

S204: Combining multiple video sequences from multiple orientations based on the display areas to generate the target video.

The on-board equipment may combine the video sequences extracted from the video data collected by the on-board cameras from different orientations to generate the target video. Particularly, the on-board equipment may play one or more video sequences extracted from the video data collected by the on-board camera in the corresponding orientation in each display area to generate the target video. The video data collected by the on-board cameras from multiple orientations may be presented to the driver, passenger, or other users in one video screen when the target video is played, which achieves the one-click video creation of the video data collected by the on-board cameras in vehicular scenarios.

The on-board equipment may also add video effects to the target video during one-click video creation. For example, background music, video style changes, sticker materials, filter processing of video images, weather replacement, etc., may be added to the target video. In the present invention there is not limit how video effects are added.

The on-board equipment, by obtaining the video data collected separately by multiple on-board cameras installed in different orientations on the vehicle, can extract one or more video sequences to be processed from the video data of each orientation. The on-board equipment, after determining the display areas of the video data from each orientation in the target video to be generated, may combine multiple video sequences from multiple orientations based on the display areas to generate the target video. The video data collected by multiple on-board cameras may be combined into a new target video based on the positional relationship of the on-board cameras, which solves the problem of the existing one-click video creation technology being unable to be applied to the on-board multi-camera scenarios, and realizes the one-click video creation of the video data collected by multiple on-board cameras in vehicular scenarios. In the meantime, based on the multiple on-board cameras in different orientations, the final generated target video can have more perspectives, forming more combination schemes and effects, which enables the target video generated by the one-click video creation to be more attractive.

In addition to combining multiple video segments for display as described above, the clarity of these multiple displayed video segments may also be adjusted to ensure that high-clarity videos are presented to the user. The specific process is as follows:

After obtaining the video sequences to be displayed within the same time using timestamp information, the clarity of the selected multiple video sequences may be identified and compared. Then, a deblurring processing is performed on the video sequence according to an identification and comparison result combined with particular vehicle information, to ensure that the clarity of the video to be displayed meets the required standards. The particular vehicle information has effects on the clarity of the videos captured by the on-board cameras, and the types of specific parameters of the particular vehicle information are not limited in the present invention and can be adjusted based on different vehicle models, driving conditions, and other factors. For example, particular vehicle information may include: vehicle speed information, vehicle location information, and/or the interface display size of the vehicle system or terminal equipment used for playing the target video.

Herein, each video sequence (referred to as a target video segment) of the selected video sequences is compared with a video having a preset clarity. If the clarity of a selected video segment is lower than the preset clarity of the video for comparison, then the reason for the reduced clarity may be determined. If it is determined that the reason includes vehicle speed information, vehicle location information, etc., then these parameters along with the clarity comparison result are used as inputs to a pre-trained deblurring model for deblurring the video to be displayed. When a difference value between the clarity of the video to be displayed and the preset clarity of the video for comparison is within a first preset range, the deblurring process stops, resulting in a video ready for display that meets the clarity requirements.

In this method, a clarity comparison is performed on the video to be displayed and the video of the preset clarity. If the clarity does not meet the requirements, the video to be displayed is processed using a deblurring model considering the factors affecting clarity, so as to ensure that the clarity of the video to be displayed meets the preset standards. This ensures high-definition video is presented to the user, enhancing video clarity and users' viewing experience.

Further, when comparing the clarity of the video to be displayed, and when performing clarity comparison on each video to be displayed and the video of the preset clarity, the clarity of the videos in different display areas may also be compared. Specifically:

Multiple video segments with the same timestamp sequence from different display areas are selected and the clarity of the multiple video segments are compared one by one. Then, the comparison result and particular vehicle information are used as inputs to the pre-trained deblurring model for deblurring. When the clarity between the deblurred videos remains within a second preset range, the deblurring process is stopped, and then the video to be displayed that meets the clarity requirements is obtained.

Here, before displaying the video, after performing the clarity comparison on the video to be displayed and the video of the preset clarity, the clarity of the video to be displayed in each selected display area is compared. By means of the deblurring model, the clarity of the video to be displayed in each display area is adjusted for consistency, to enable the videos displayed in different areas to have the same clarity, to ensure that the overall video eventually presented to the user is in the same clarity, so as to ensure the consistency of the clarity of the video played by the display screen, and then enhance the stability of the video playback.

To further explain the video deblurring process in the present invention, now taking particular vehicle information including vehicle speed, vehicle location, and interface display size as an example to introduce the video deblurring process.

Matching relations among different speeds, different vehicle location information, different interface display sizes and different video deblurring models may be pre-stored by the vehicle system. Thus, the vehicle system, after obtaining a target movement speed of the corresponding camera when shooting of the image to be processed, different vehicle location information and different interface display sizes, can determine a target video deblurring model matching the speed, vehicle location, and interface display size according to the target movement speed as well as the pre-stored matching relation between different video deblurring models and different speeds, the matching relation between different video deblurring models and different vehicle locations, the interface display size as well as and the pre-stored matching relation between different video deblurring models and different interface display sizes.

The vehicle system may pre-build a model library for storing multiple video deblurring models, and each video deblurring model corresponds to a preset speed range, a preset location area, and an interface display size range. Thus, the vehicle system may find the target video deblurring model matching the target movement speed of the corresponding camera when shooting of the image to be processed, the location information and the interface display size from the pre-built model library. The preset speed range may be set as needed which will not be limited in here. For example, the preset speed range may be (0, 30), [30, 40], (40, 50], (50, 60], (60, 70], (70, 80], (80, 90], and (90, +∞), etc., and the unit of any speed in the above speed range is km/h. The preset location area may be set in city streets or city attractions, such as street a in city A or attraction b in city A. The interface display size may be set according to the size of the current display screen in the vehicle.

Particularly, the vehicle system may determine the target speed range based on the target movement speed, then find a first target video deblurring model corresponding to the video to be processed from the pre-built model library based on the target speed range. Next, the vehicle system may determine the preset location area based on the vehicle location information and find a second target video deblurring model corresponding to the video to be processed from the pre-built model library. Finally, the vehicle system may determine the interface display size range based on the interface display size and find a third target video deblurring model corresponding to the video to be processed from the pre-built model library. Then, the video to be displayed is deblurred by using the first, second, and third target video deblurring models, to obtain three processed videos. The clarity of the three processed videos is compared, and the clearest video is selected as the final video to be displayed.

Alternatively, the video deblurring model is selected based on pre-trained corresponding relations among preset speed ranges, preset location areas, and interface display sizes. Particularly:

A target speed-location corresponding range is determined according to the current vehicle location information combined with the current speed. Next, a primary deblurring model for the video to be processed is found from the pre-built model library according to the speed-location corresponding range. A target display scaling ratio corresponding to the interface display size is determined based on the primary deblurring model, and the target video deblurring model is found from the pre-built model library according to the primary deblurring model and the target display scaling ratio. Then, the video to be displayed is deblurred by using this target video deblurring model to obtain the final clear video.

The trained video deblurring model is used in combination with vehicle speed information, vehicle location information and interface display size to deblur the video to be displayed, such that it is possible to deblur the video under conditions of various speeds, locations, and display sizes. This improves the applicability of the video deblurring process to various vehicle conditions.

To further elaborate on the training process of the video deblurring model, the training process using speed as the training parameter is discussed. An image-based video deblurring scheme may be used .

In the video deblurring method, for each preset speed range, the vehicle system may obtain the video deblurring model corresponding to each preset speed range through the following operations, detailed as follows:

Each frame image of an original sample video corresponding to a preset speed range is obtained as an original sample image.

The original sample image is input into a preset original image deblurring model for processing to obtain a preprocessed sample image.

An edge detection algorithm is used to process the original sample image and the preprocessed sample image to obtain a first operator corresponding to the original sample image and a second operator corresponding to the preprocessed sample image.

A loss function corresponding to the original sample image is calculated based on the first and second operators.

Parameters of the original image deblurring model are optimized based on the loss function to obtain an image deblurring model corresponding to the preset speed range.

For each preset speed range, the terminal equipment may input the original sample image corresponding to the preset speed range into the preset original image deblurring model for processing, to obtain the preprocessed sample image corresponding to the original sample image. Herein, the original image deblurring model may be a pre-built deep learning model, such as a Generative Adversarial Network (Deblur GAN) model.

The terminal equipment, after obtaining the preprocessed sample image, may use the edge detection algorithm to process the original sample image and the pre-processed sample image respectively, to obtain the first operator corresponding to the original sample image and the second operator corresponding to the pre-processed sample image. Herein, the edge detection algorithm includes, but is not limited to, Sobel edge detection algorithm, Canny edge detection algorithm, or Laplacian edge detection algorithm.

Taking the Sobel edge detection algorithm as an example, the terminal equipment may specifically calculate the loss function according to the following formula:

$$Lsobel = Ysobel - \mathrm{Predict\_sobel};$$

In the formula, *Lsobel* represents the loss function, *Predict_sobel* represents the first operator corresponding to the original sample image, and *Ysobel* represents the second operator corresponding to the pre-processed sample image.

The terminal equipment, after obtaining the loss function, may use this loss function as the backpropagation error to update network weights in the original image deblurring model. This means performing parameter optimization on the original image deblurring model based on the loss function to obtain the image deblurring model corresponding to the preset speed range.

As can be seen from the above, the image deblurring method trains the original image deblurring model corresponding to each preset speed range by inputting the original sample image into the preset original image deblurring model for processing to obtain the pre-processed sample image. Then, the edge detection algorithm is used to process the pre-processed sample image and the original sample image respectively, to obtain the first operator corresponding to the original sample image and the second operator corresponding to the pre-processed sample image. The loss function is then calculated based on the first operator and the second operator and used as the backpropagation error to optimize the parameters of the original image deblurring model. This strengthens the edge parts of the original sample image in the original deblurring model, thereby a trained image deblurring model is obtained. The image deblurring model obtained by this method can achieve higher image clarity, which further improves the image quality of the deblurred image. It should be noted that the sequence of steps above does not imply the order of execution; the order of execution should be determined by its function and intrinsic logic and should not impose any limitation on the implementation process of the present invention.

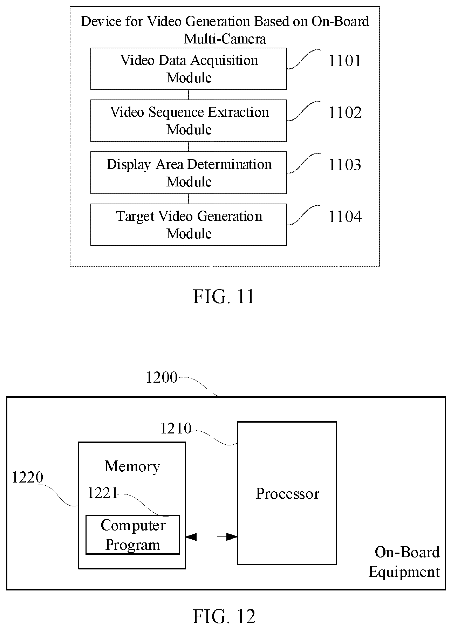

Refer to FIG. 11, which shows a schematic diagram of a device for video generation based on on-board multi-camera. The device particularly includes a video data acquisition module 1101, a video sequence extraction module 1102, a display area determination module 1103, and a target video generation module 1104, in which:

The video data acquisition module 1101 is configured to obtain video data collected separately by multiple on-board cameras installed on a vehicle in different orientations, where each of the on-board cameras is configured to collect video data from a corresponding orientation;

The video sequence extraction module 1102 is configured to extract one or more video sequences to be processed from the video data of each orientation;

The display area determination module 1103 is configured to determine display areas of the video data from each orientation in a target video to be generated;

The target video generation module 1104 is configured to combine multiple video sequences from multiple orientations based on the display areas to generate the target video.

The video sequence extraction module 1102 may particularly be configured to: determine a main camera among the multiple on-board cameras in different orientations; extract one or more main video sequences from the video data collected by the main camera, where each main video sequence has corresponding time information; and extract respectively one or more auxiliary video sequences having the same time information from the video data collected by other on-board cameras except the main camera. The video sequences include the main and auxiliary video sequences.

The video sequence extraction module 1102 may also be configured to: obtain map navigation information of the vehicle during a driving process; identify a key location encountered during the driving process based on the map navigation information; determine the main camera among the multiple on-board cameras based on a driving direction of the vehicle and the key location, where the video data collected by the main camera is the video data captured by the main camera for the key location.

The video sequence extraction module 1102 may also be configured to: determine respectively timestamps of a start video frame and an end video frame of each main video sequence according to the time information, to obtain a timestamp sequence; mark the timestamp sequence in the video data collected by the other on-board cameras except the main camera; determine in sequence the video sequences to be extracted from the video data marked with the timestamp sequence and extract the same, to obtain one or more auxiliary video sequences having the time information.

The display area determination module 1103 may particularly be configured to: receive a video template selected for the target video to be generated, where the video template includes multiple template areas, and any of the template areas has a binding relation to the on-board camera in different orientations of the vehicle; determine the display areas of the video data from each orientation in the target video to be generated according to the binding relations between the on-board camera in different orientations and the template areas.

The target video generation module 1104 may particularly be configured to: play separately one or more video sequences extracted from the video data collected by the on-board cameras of the corresponding orientation in each of the display areas to generate the target video.

The device also may include a video special effect adding module, which may particularly be configured to: add video special effects to the target video, where the video special effects include at least one of the following processing:

adding background music, changing video style, adding sticker materials, applying filters to the video image, and replacing weather.

The device also may include a video clarity processing module, which may particularly be configured to: identify and compare the video clarity of multiple video sequences; perform deblurring processing on the video sequences according to an identification and comparison result combined with particular vehicle information, to ensure that the video clarity of multiple video sequences meets preset conditions.

The video clarity processing module may also particularly be configured to: perform clarity comparison on a target video segment and a video of a preset clarity to obtain an identification and comparison result, where the target video segment is any video segment of the multiple video sequences, and the identification and comparison result includes a relationship between the clarity of the target video segment and the preset clarity; determine a factor affecting the clarity of the target video segment if the clarity of the target video segment is less than the preset clarity; and

correspondingly perform, if the factor affecting the clarity of the target video segment is the particular vehicle information, deblurring processing on the video sequences according to the identification and comparison result combined with the particular vehicle information to ensure that the video clarity of multiple video sequences meets the preset conditions.

The video clarity processing module may also particularly be configured to: perform clarity comparison on the target video segment and the video of the preset clarity to obtain a first comparison result, where the target video segment is any video segment of the multiple video sequences, and the first comparison result includes a relationship between the clarity of the target video segment and the preset clarity; select multiple target video segments having the same timestamp sequence from different display areas; compare the video clarity of any two target video segments among the selected multiple target video segments to obtain a second comparison result, where the second comparison result includes a relationship between the video clarity of the two video segments, and the identification and comparison result includes the first comparison result and the second comparison result.

The particular vehicle information may include a vehicle speed, vehicle location information and an interface display size. The video clarity processing module may also particularly be configured to: obtain the video deblurring model based on the vehicle speed of the vehicle when collecting the target video segment, the vehicle location information, and the interface display size of the display area corresponding to the target video segment, where corresponding relations among different vehicle speeds, different vehicle location information, different interface display sizes, and different video deblurring models are pre-stored; and

input the comparison result and the particular vehicle information into the pre-trained video deblurring model to perform deblurring processing on the target video segment in the video sequences, to ensure that the video clarity of multiple video sequences meets the preset conditions.

The particular vehicle information may include the vehicle speed, the vehicle location information and the interface display size. The video clarity processing module may also particularly be configured to perform the following operations for each target video segment in the multiple video sequences: determining, based on the vehicle speed of the vehicle when collecting the target video segment, a first video deblurring model corresponding to the vehicle speed, and using the first video deblurring model to perform deblurring processing on the target video segment to obtain a first segment video, where a relationship between different vehicle speeds and different video deblurring models is pre-stored; determining, based on the vehicle location information of the vehicle when collecting the target video segment, a second video deblurring model corresponding to the vehicle location information, and using the second video deblurring model to perform deblurring processing on the target video segment to obtain a second segment video, where a relationship between different vehicle location information and different video deblurring models is pre-stored; determining, based on the interface display size of the display area corresponding to the target video segment, a third video deblurring model corresponding to the interface display size, and using the third video deblurring model to perform deblurring processing on the target video segment to obtain a third segment video, where a relationship between different interface display sizes and different video deblurring models is pre-stored; and determining a segment video having the highest clarity among the first segment video, the second segment video and the third segment video, where the segment video having the highest clarity is the segment video corresponding to the target video segment that meets the preset conditions.

The video sequence extraction module 1102 may particularly be configured to determine the main camera among the multiple on-board cameras based on actual video content captured by each on-board camera.

The video sequence extraction module 1102 may also be configured to designate, based on the driving direction of the vehicle and the key location, the on-board camera that can capture the key location as the main camera for the vehicle at this location.

The devices are essentially similar to the above methods, thus, the description here is relatively simple, and for the relevant details, references may be made to the above methods.

Refer to FIG. 12, which shows a schematic diagram of a piece of on-board equipment. As shown in FIG. 12, the on-board equipment 1200 includes: a processor 1210, a memory 1220, and a computer program 1221 stored in the memory 1220 and executable by the processor 1210. The processor 1210, when executing the computer program 1221, is configured to implement the steps of the method for video generation based on on-board multi-camera, such as the steps S201 to S204 shown in FIG. 2. Alternatively, the processor 1210, when executing the computer program 1221, is configured to implement the functions of each module/unit, such as the functions of modules 1101 to 1104 shown in FIG. 11.

Exemplarily, the computer program 1221 may be divided into one or more modules/units, which are stored in the memory 1220, and executed by the processor 1210 to complete the present invention. The one or more modules/units may be a series of computer program instruction segments capable of performing specific functions, describing the execution process of the computer program 1221 in the on-board equipment 1200. For example, the computer program 1221 may be divided into a video data acquisition module, a video sequence extraction module, a display area determination module, and a target video generation module. The specific functions of the various modules are as follows: The video data acquisition module is configured to obtain video data collected separately by multiple on-board cameras installed in different orientations on the vehicle, where each on-board camera is configured to collect video data from a corresponding orientation.

The video sequence extraction module is configured to extract one or more video sequences to be processed from the video data of each orientation;

> The display area determination module is configured to determine display areas of the video data from each orientation in a target video to be generated;
> The target video generation module is configured to combine multiple video sequences from multiple orientations based on the display areas to generate the target video.

The on-board equipment 1200 may be the on-board computer, on-board video processing device, or other equipment mentioned in the foregoing. The on-board equipment 1200 may include, but not limited to, the processor 1210 and the memory 1220. Persons skilled in the art can understand that FIG. 12 is merely an exemplary representation of the on-board equipment 1200 and does not constitute a limitation on the on-board equipment 1200. The on-board equipment may include more or fewer components than shown, combine some components, or include different components. For instance, the on-board equipment 1200 may also include input/output devices, network access devices, buses, and so on.

The processor 1210 may be a central processing unit (Central Processing Unit, CPU) or other general-purpose processors, digital signal processors (Digital Signal Processor, DSP), application-specific integrated circuits, (Application-Specific Integrated Circuit, ASIC), field-programmable gate arrays (Field-Programmable Gate Array, FPGA), other programmable logic devices, discrete gate or transistor logic devices, discrete hardware components, etc. A general-purpose processor may be a microprocessor or any conventional processor.

The memory 1220 may be an internal storage unit of the on-board equipment 1200, such as a hard disk or memory of the on-board equipment 1200. The memory 1220 may also be an external storage device of the on-board equipment 1200, such as a plug-in hard disk, a smart media card (Smart Media Card, SMC), a secure digital (Secure Digital, SD) card, a flash card (Flash Card), etc., equipped on the on-board equipment 1200. Furthermore, the memory 1220 may include both internal storage units and external storage devices of the on-board equipment 1200. The memory 1220 is configured to store the computer program 1221 and other programs and data required by the on-board equipment 1200. The memory 1220 may also be configured to temporarily store data that has been output or will be output.

The present invention also provides a piece of on-board equipment including a memory, a processor, and a computer program stored in the memory and executable by the processor. The processor, when executing the computer program, is configured to implement the method for video generation based on on-board multi-camera as described above.

The present invention may be implemented as a computer-readable storage medium storing a computer program. The computer program, when executed by a processor, causes the method for video generation based on on-board multi-camera as described.

The present invention also may be implemented as a computer program product. The computer program product when running on a computer, enables the computer to execute the method for video generation based on on-board multi-camera as described.

The various functions implemented by the on-board equipment in the present invention, if realized in the form of software functional units and sold or used as independent products, may be stored in a computer-readable storage medium. Based on this understanding, all or part of the processes in the methods may be completed by instructing related hardware through a computer program. The computer program may be stored in a computer-readable storage medium, which, when executed by a processor, enables the steps in the methods to be implemented. Herein, the computer program includes computer program code, which may be in the form of source code, object code, executable files, or some intermediate form. The computer-readable medium may at least include any entity or device capable of carrying computer program code to a video generation device/on-board equipment based on on-board multi-camera, recording media, a computer storage, a read-only memory (Read-Only Memory, ROM), a random-access memory (Random Access Memory, RAM), electrical carrier signals, telecommunications signals, and software distribution media, such as USB drives, mobile hard drives, magnetic disks, or optical discs.

In the above descriptions each have their focus, for parts that are not detailed or recorded in one description, references may be made to the relevant other descriptions. Persons skilled in the art can recognize that the units and algorithm steps described may be implemented in electronic hardware, or in a combination of computer software and electronic hardware. Whether these functions are executed in hardware or software depends on the specific application and design constraints of the technical solution. Professionals may use different methods to achieve the described functions for each specific application, but this implementation should not be considered beyond the scope of the present invention.

In the present invention, it should be understood that the disclosed device/on-board equipment and method may be implemented in other ways. For example, the described device/on-board equipment are merely illustrative. For instance, the division of modules or units is just a logical function division. Actual implementation may have other division methods, such as combining multiple units or components or integrating them into another system, or some features may be ignored or not executed. Moreover, the coupling or direct coupling or communication connection between the illustrated or discussed elements may be indirect coupling or communication connection through some interface, device, or unit, and may be in electrical, mechanical, or other forms.

The units described as separate components may be or may not be physically separated. Components shown as units may be or may not be physical units, i.e., these components may be located in one place or distributed across multiple network units. Some or all of the units may be selected to achieve the purposes according to actual needs.

**Claims**

1. A method for video generation based on on-board multi-camera, the method comprising:

    (S201) obtaining video data collected separately by multiple on-board cameras installed in different orientations on a vehicle, wherein each of the on-board cameras is configured to collect video data from a corresponding orientation;
    (S202) extracting one or more video sequences to be processed from the video data of each orientation by:

        - (S2021) determining a main camera among the multiple on-board cameras in different orientations by:

            -- (S211) obtaining map navigation information of the vehicle during a driving process of the vehicle;
            -- (S212) identifying a key location encountered during the driving process based on the map navigation information; and

            -- (S213) determining the main camera from the multiple on-board cameras based on a driving direction of the vehicle and the key location, wherein the video data collected by the main camera is the video data captured by the main camera for the key location;

        - (S2022) extracting one or more main video sequences from the video data collected by the main camera, wherein each of the main video sequences has corresponding time information; and
        - (S2023) extracting respectively one or more auxiliary video sequences having the time information from the video data collected by other on-board cameras except the main camera, wherein the video sequences comprise the main video sequences and the auxiliary video sequences;

    (S203) determining display areas of the video data from each orientation in a target video to be generated; and
    (S204) combining multiple video sequences from multiple orientations based on the display areas to generate the target video.

2. The method according to claim 1, wherein said (S2023) extracting respectively the one or more auxiliary video sequences having the time information from the video data collected by the other on-board cameras except the main camera comprises:

    (S231) determining respectively timestamps of a start video frame and an end video frame for each main video sequence based on the time information to obtain a timestamp sequence;
    (S232) marking the timestamp sequence in the video data collected by the other on-board cameras except the main camera; and
    (S233) sequentially determining video sequences to be extracted from the video data marked with the timestamp sequence and extracting the video sequences to be extracted to obtain the one or more auxiliary video sequences having the time information.

3. The method according to claim 1 or 2, wherein said (S203) determining the display areas of the video data from each orientation in the target video to be generated comprises:

    receiving a video template selected for the target video to be generated, wherein the video template comprises multiple template areas, and the template areas respectively have a binding relation to the on-board camera in different orientations on the vehicle; and

determining the display areas of the video data from each orientation in the target video to be generated based on binding relations between the on-board cameras in different orientations and the template areas.

4. The method according to claim 3, wherein said (S204) combining the multiple video sequences from the multiple orientations based on the display areas to generate the target video comprises:

playing, in each of the display areas, one or more video sequences extracted from the video data collected by the on-board camera in a corresponding orientation to generate the target video.

5. The method according to any one of claims 1 or 2 or 4, wherein after (S204) combining the multiple video sequences from the multiple orientations based on the display areas to generate the target video, the method further comprises:

adding video effects to the target video;

wherein the video effects comprise at least one of the following processing:

adding background music, changing video style, adding sticker materials, applying filters to the video image, and replacing weather.

6. The method according to claim 1, wherein, before (S204) combining the multiple video sequences from the multiple orientations based on the display areas to generate the target video, the method further comprises:

identifying and comparing a video clarity of the multiple video sequences; and

performing deblurring processing on the video sequences based on an identification and comparison result and in combination with particular vehicle information, to ensure that the video clarity of the multiple video sequences meet preset conditions.

7. The method according to claim 6, wherein said identifying and comparing the video clarity of the multiple video sequences comprises:

performing clarity comparison on a target video segment and a video of a preset clarity to obtain an identification and comparison result, wherein the target video segment is any video segment of the multiple video sequences, and the identification and comparison result comprises a relationship between the clarity of the target video segment and the preset clarity;

determining, if the clarity of the target video segment is less than the preset clarity, a factor affecting the clarity of the target video segment; and

correspondingly performing, if the factor affecting the clarity of the target video segment is the particular vehicle information, deblurring processing on the video sequences based on the identification and comparison result and combined with the particular vehicle information to ensure that the video clarity of the multiple video sequences meet the preset conditions.

8. The method according to claim 6, wherein said identifying and comparing the video clarity of the multiple video sequences comprises:

performing clarity comparison on a target video segment and a video of a preset clarity to obtain a first comparison result, wherein the target video segment is any video segment of the multiple video sequences, and the first comparison result comprises a relationship between the clarity of the target video segment and the preset clarity;

selecting multiple target video segments having a same timestamp sequence but in different display areas; and

performing comparison on video clarity of any two target video segments of the selected multiple target video segments to obtain a second comparison result, wherein the second comparison result comprises a relationship of the video clarity between the two target video segments, and the identification and comparison result comprises the first comparison result and the second comparison result.

9. The method according to claim 7, wherein the particular vehicle information comprises a vehicle speed, vehicle location information, and an interface display size;

said performing deblurring processing on the video sequences based on the identification and comparison result and combined with the particular vehicle information to ensure that the video clarity of the multiple video sequences meet the preset conditions comprises:

obtaining a video deblurring model based on the vehicle speed of the vehicle when collecting the target video segment, the vehicle location information and the interface display size of a display area corresponding to the target video segment, wherein corresponding relations among different vehicle speeds, different vehicle location information, different interface display sizes, and different video deblurring models are prestored; and

inputting the identification and comparison result and the particular vehicle information into a pre-trained video deblurring model to perform deblurring processing on the target video segment in the video sequences, to ensure that the video clarity of the multiple video sequences meet the preset conditions.

10. The method according to claim 7, wherein the particular vehicle information comprises a vehicle speed, vehicle location information, and an interface display size;
said performing deblurring processing on the video sequences based on the identification and comparison result and combined with the particular vehicle information to ensure that the video clarity of the multiple video sequences meet the preset conditions comprises:

for each target video segment in the multiple video sequences, performing the following operations: determining a first video deblurring model corresponding to the vehicle speed based on the vehicle speed of the vehicle when collecting the target video segment, and performing deblurring processing on the target video segment using the first video deblurring model to obtain a first video segment, wherein a corresponding relation between different vehicle speeds and different video deblurring models is pre-stored;
determining a second video deblurring model corresponding to the vehicle location information based on the vehicle location information when collecting the target video segment, and performing deblurring processing on the target video segment using the second video deblurring model to obtain a second video segment, wherein a corresponding relation between different vehicle location information and different video deblurring models is pre-stored;
determining a third video deblurring model corresponding to the interface display size based on the interface display size of a display area corresponding to the target video segment, and performing deblurring processing on the target video segment using the third video deblurring model to obtain a third video segment, wherein a corresponding relation between different interface display sizes and different video deblurring models is pre-stored; and
determining a video segment having a highest clarity among the first video segment, the second video segment, and the third video segment, and the video segment having the highest clarity is the target video segment meeting the preset conditions.

11. The method according to claim 1, wherein said determining the main camera among the multiple on-board cameras in different orientations comprises:
determining the main camera among the multiple on-board cameras based on actual video content captured by each of the on-board cameras.

12. The method according to claim 1, wherein said determining the main camera from the multiple on-board cameras based on the driving direction of the vehicle and the key location comprises:
designating an on-board camera that can capture the key location as the main camera for the vehicle at this location based on the driving direction of the vehicle and the key location.

13. A piece of on-board equipment (1200), comprising a memory (1220), a processor (1210), and a computer program (1221) stored in the memory (1220) and executable by the processor (1210), wherein the processor, (1210) when executing the computer program (1221), is configured to implement the method for video generation based on on-board multi-camera according to any of claims 1 to 12.

14. A computer-readable storage medium storing a computer program (1221), wherein the computer program (1221), when executed by a processor (1210), causes processor (1210) to implement the method for video generation based on on-board multi-camera according to any of claims 1 to 12 .

15. A computer program product (1221), wherein the computer program product (1221), when running on a piece of on-board equipment (1200), enables the on-board equipment (1200) to execute the method for video generation based on on-board multi-camera according to any of claims 1 to 12.

**Patentansprüche**

1. Verfahren zur Videoerzeugung basierend auf mehreren Bordkameras, wobei das Verfahren aufweist:

(S201) Erhalten von Videodaten, die separat von mehreren in unterschiedlichen Ausrichtungen an einem Fahrzeug installierten Bordkameras erfasst werden, wobei jede der Bordkameras dazu konfiguriert ist, Videodaten aus einer entsprechenden Ausrichtung zu erfassen;
(S202) Extrahieren einer oder mehrerer zu verarbeitender Videosequenzen aus den Videodaten jeder Ausrichtung durch:

- (S2021) Bestimmen einer Hauptkamera unter den mehreren Bordkameras in unterschiedlichen Ausrichtungen durch:

-- (S211) Erhalten von Kartennavigationsinformation des Fahrzeugs während eines Fahrvorgangs des Fahrzeugs;

-- (S212) Identifizieren eines während des Fahrvorgangs angetroffenen Schlüsselorts basierend auf der Kartennavigationsinformation; und

-- (S213) Bestimmen der Hauptkamera aus den mehreren Bordkameras basierend auf einer Fahrtrichtung des Fahrzeugs und dem Schlüsselort, wobei die von der Hauptkamera erfassten Videodaten die von der Hauptkamera für den Schlüsselort aufgenommenen Videodaten sind;

- (S2022) Extrahieren einer oder mehrerer Hauptvideosequenzen aus den von der Hauptkamera erfassten Videodaten, wobei jede der Hauptvideosequenzen eine entsprechende Zeitinformation aufweist; und

- (S2023) jeweiliges Extrahieren einer oder mehrerer die Zeitinformation aufweisender Hilfsvideosequenzen aus den von anderen Bordkameras außer der Hauptkamera erfassten Videodaten, wobei die Videosequenzen die Hauptvideosequenzen und die Hilfsvideosequenzen aufweisen;

(S203) Bestimmen von Anzeigebereichen der Videodaten aus jeder Ausrichtung in einem zu erzeugenden Zielvideo; und

(S204) Kombinieren mehrerer Videosequenzen aus mehreren Ausrichtungen basierend auf den Anzeigebereichen, um das Zielvideo zu erzeugen.

2. Verfahren nach Anspruch 1, wobei das (S2023) jeweilige Extrahieren der einen oder mehreren die Zeitinformation aufweisenden Hilfsvideosequenzen aus den von den anderen Bordkameras außer der Hauptkamera erfassten Videodaten aufweist:

(S231) jeweiliges Bestimmen von Zeitstempeln eines Anfangsvideobilds und eines Endvideobilds für jede Hauptvideosequenz basierend auf der Zeitinformation, um eine Zeitstempelsequenz zu erhalten;

(S232) Markieren der Zeitstempelsequenz in den von den anderen Bordkameras außer der Hauptkamera erfassten Videodaten; und

(S233) sequenzielles Bestimmen von aus den mit der Zeitstempelsequenz markierten Videodaten zu extrahierenden Videosequenzen und Extrahieren der zu extrahierenden Videosequenzen, um die eine oder mehreren die Zeitinformation aufweisenden Hilfsvideosequenzen zu erhalten.

3. Verfahren nach Anspruch 1 oder 2, wobei das (S203) Bestimmen der Anzeigebereiche der Videodaten aus jeder Ausrichtung in dem zu erzeugenden Zielvideo aufweist:

Empfangen einer für das zu erzeugende Zielvideo ausgewählten Videovorlage, wobei die Videovorlage mehrere Vorlagenbereiche aufweist und die Vorlagenbereiche jeweils eine Zuordnungsbeziehung zu der Bordkamera in unterschiedlichen Ausrichtungen an dem Fahrzeug aufweisen; und

Bestimmen der Anzeigebereiche der Videodaten aus jeder Ausrichtung in dem zu erzeugenden Zielvideo basierend auf Zuordnungsbeziehungen zwischen den Bordkameras in unterschiedlichen Ausrichtungen und den Vorlagenbereichen.

4. Verfahren nach Anspruch 3, wobei das (S204) Kombinieren der mehreren Videosequenzen aus den mehreren Ausrichtungen basierend auf den Anzeigebereichen, um das Zielvideo zu erzeugen, aufweist:

Abspielen, in jedem der Anzeigebereiche, einer oder mehrerer aus den von der Bordkamera in einer entsprechenden Ausrichtung erfassten Videodaten extrahierter Videosequenzen, um das Zielvideo zu erzeugen.

5. Verfahren nach einem der Ansprüche 1 oder 2 oder 4, wobei nach dem (S204) Kombinieren der mehreren Videosequenzen aus den mehreren Ausrichtungen basierend auf den Anzeigebereichen, um das Zielvideo zu erzeugen, das Verfahren ferner aufweist:

Hinzufügen von Videoeffekten zu dem Zielvideo;

wobei die Videoeffekte mindestens eine der folgenden Verarbeitungen aufweisen:

Hinzufügen von Hintergrundmusik, Ändern eines Videostils, Hinzufügen von Etikett-Materialien, Anwenden von Filtern auf das Videobild und Ersetzen von Wetter.

6. Verfahren nach Anspruch 1, wobei vor dem (S204) Kombinieren der mehreren Videosequenzen aus den mehreren Ausrichtungen basierend auf den Anzeigebereichen, um das Zielvideo zu erzeugen, das Verfahren ferner aufweist:

Identifizieren und Vergleichen einer Videoschärfe der mehreren Videosequenzen; und

Durchführen einer Unschärfereduktionsverarbeitung an den Videosequenzen basierend auf einem Identifizierungs- und Vergleichsergebnis und in Kombination mit bestimmter Fahrzeuginformation, um sicherzustellen, dass die Videoschärfe der mehreren Videosequenzen voreingestellte Bedingungen erfüllt.

7. Verfahren nach Anspruch 6, wobei das Identifizieren und Vergleichen der Videoschärfe der mehreren Videosequenzen aufweist:

   Durchführen eines Schärfevergleichs an einem Zielvideosegment und einem Video einer voreingestellten Schärfe, um ein Identifizierungs- und Vergleichsergebnis zu erhalten, wobei das Zielvideosegment ein beliebiges Videosegment der mehreren Videosequenzen ist und das Identifizierungs- und Vergleichsergebnis eine Beziehung zwischen der Schärfe des Zielvideosegments und der voreingestellten Schärfe aufweist;
   Bestimmen, wenn die Schärfe des Zielvideosegments geringer als die voreingestellte Schärfe ist, eines Faktors, der die Schärfe des Zielvideosegments beeinflusst; und
   entsprechendes Durchführen, wenn der Faktor, der die Schärfe des Zielvideosegments beeinflusst, die bestimmte Fahrzeuginformation ist, einer Unschärfereduktionsverarbeitung an den Videosequenzen basierend auf dem Identifizierungs- und Vergleichsergebnis und kombiniert mit der bestimmten Fahrzeuginformation, um sicherzustellen, dass die Videoschärfe der mehreren Videosequenzen die voreingestellten Bedingungen erfüllt.

8. Verfahren nach Anspruch 6, wobei das Identifizieren und Vergleichen der Videoschärfe der mehreren Videosequenzen aufweist:

   Durchführen eines Schärfevergleichs an einem Zielvideosegment und einem Video einer voreingestellten Schärfe, um ein erstes Vergleichsergebnis zu erhalten, wobei das Zielvideosegment ein beliebiges Videosegment der mehreren Videosequenzen ist und das erste Vergleichsergebnis eine Beziehung zwischen der Schärfe des Zielvideosegments und der voreingestellten Schärfe aufweist;
   Auswählen mehrerer Zielvideosegmente, die eine gleiche Zeitstempelsequenz aufweisen, aber in unterschiedlichen Anzeigebereichen liegen; und
   Durchführen eines Vergleichs der Videoschärfe beliebiger zweier Zielvideosegmente der ausgewählten mehreren Zielvideosegmente, um ein zweites Vergleichsergebnis zu erhalten, wobei das zweite Vergleichsergebnis eine Beziehung der Videoschärfe zwischen den zwei Zielvideosegmenten aufweist und das Identifizierungs- und Vergleichsergebnis das erste Vergleichsergebnis und das zweite Vergleichsergebnis aufweist.

9. Verfahren nach Anspruch 7, wobei die bestimmte Fahrzeuginformation eine Fahrzeuggeschwindigkeit, eine Fahrzeugstandortinformation und eine Schnittstellenanzeigegröße aufweist;
   wobei das Durchführen der Unschärfereduktionsverarbeitung an den Videosequenzen basierend auf dem Identifizierungs- und Vergleichsergebnis und kombiniert mit der bestimmten Fahrzeuginformation, um sicherzustellen, dass die Videoschärfe der mehreren Videosequenzen die voreingestellten Bedingungen erfüllt, aufweist:

   Erhalten eines Video-Unschärfereduktionsmodells basierend auf der Fahrzeuggeschwindigkeit des Fahrzeugs beim Erfassen des Zielvideosegments, der Fahrzeugstandortinformation und der Schnittstellenanzeigegröße eines dem Zielvideosegment entsprechenden Anzeigebereichs, wobei Zuordnungsbeziehungen zwischen verschiedenen Fahrzeuggeschwindigkeiten, verschiedenen Fahrzeugstandortinformationen, verschiedenen Schnittstellenanzeigegrößen und verschiedenen Video-Unschärfereduktionsmodellen vorgespeichert sind; und
   Eingeben des Identifizierungs- und Vergleichsergebnisses und der bestimmten Fahrzeuginformation in ein vortrainiertes Video-Unschärfereduktionsmodell, um eine Unschärfereduktionsverarbeitung an dem Zielvideosegment in den Videosequenzen durchzuführen, um sicherzustellen, dass die Videoschärfe der mehreren Videosequenzen die voreingestellten Bedingungen erfüllt.

10. Verfahren nach Anspruch 7, wobei die bestimmte Fahrzeuginformation eine Fahrzeuggeschwindigkeit, eine Fahrzeugstandortinformation und eine Schnittstellenanzeigegröße aufweist;
    wobei das Durchführen der Unschärfereduktionsverarbeitung an den Videosequenzen basierend auf dem Identifizierungs- und Vergleichsergebnis und kombiniert mit der bestimmten Fahrzeuginformation, um sicherzustellen, dass die Videoschärfe der mehreren Videosequenzen die voreingestellten Bedingungen erfüllt, aufweist:

    für jedes Zielvideosegment in den mehreren Videosequenzen Durchführen der folgenden Vorgänge: Bestimmen eines ersten Video-Unschärfereduktionsmodells, das der Fahrzeuggeschwindigkeit entspricht, basierend auf der Fahrzeuggeschwindigkeit des Fahrzeugs beim Erfassen des Zielvideosegments, und Durchführen einer Unschärfereduktionsverarbeitung an dem Zielvideosegment unter Verwendung des ersten Video-Unschärfereduktionsmodells, um ein erstes Videosegment zu erhalten, wobei eine Zuordnungsbeziehung zwischen verschiedenen Fahrzeuggeschwindigkeiten und verschiedenen Video-Unschärfereduktionsmodellen vorgespeichert ist;
Bestimmen eines zweiten Video-Unschärfereduktionsmodells, das der Fahrzeugstandortinformation entspricht, basierend auf der Fahrzeugstandortinformation beim Erfassen des Zielvideosegments, und Durchführen einer Unschärfereduktionsverarbeitung an dem Zielvideosegment unter Verwendung des zweiten Video-Unschärfereduktionsmodells, um ein zweites Videosegment zu erhalten, wobei eine Zuordnungsbeziehung zwischen verschiedenen Fahrzeugstandortinformationen und verschiedenen Video-Unschärfereduktionsmodellen vorgespeichert ist;
Bestimmen eines dritten Video-Unschärfereduktionsmodells, das der Schnittstellenanzeigegröße entspricht, basierend auf der Schnittstellenanzeigegröße eines dem Zielvideosegment entsprechenden Anzeigebereichs, und Durchführen einer Unschärfereduktionsverarbeitung an dem Zielvideosegment unter Verwendung des dritten Video-Unschärfereduktionsmodells, um ein drittes Videosegment zu erhalten, wobei eine Zuordnungsbeziehung zwischen verschiedenen Schnittstellenanzeigegrößen und verschiedenen Video-Unschärfereduktionsmodellen vorgespeichert ist; und
Bestimmen eines Videosegments mit einer höchsten Schärfe unter dem ersten Videosegment, dem zweiten Videosegment und dem dritten Videosegment, wobei das Videosegment mit der höchsten Schärfe das die voreingestellten Bedingungen erfüllende Zielvideosegment ist.

11. Verfahren nach Anspruch 1, wobei das Bestimmen der Hauptkamera unter den mehreren Bordkameras in unterschiedlichen Ausrichtungen aufweist:
Bestimmen der Hauptkamera unter den mehreren Bordkameras basierend auf tatsächlichem Videoinhalt, der von jeder der Bordkameras aufgenommen wird.

12. Verfahren nach Anspruch 1, wobei das Bestimmen der Hauptkamera aus den mehreren Bordkameras basierend auf der Fahrtrichtung des Fahrzeugs und dem Schlüsselort aufweist:
Festlegen einer Bordkamera, die den Schlüsselort aufnehmen kann, als die Hauptkamera für das Fahrzeug an diesem Ort basierend auf der Fahrtrichtung des Fahrzeugs und dem Schlüsselort.

13. Bordgerät (1200), aufweisend einen Speicher (1220), einen Prozessor (1210) und ein Computerprogramm (1221), das in dem Speicher (1220) gespeichert und durch den Prozessor (1210) ausführbar ist, wobei der Prozessor (1210) beim Ausführen des Computerprogramms (1221) dazu konfiguriert ist, das Verfahren zur Videoerzeugung basierend auf Bordmultikamera nach einem der Ansprüche 1 bis 12 zu implementieren.

14. Computerlesbares Speichermedium, das ein Computerprogramm (1221) speichert, wobei das Computerprogramm (1221), wenn es durch einen Prozessor (1210) ausgeführt wird, den Prozessor (1210) veranlasst, das Verfahren zur Videoerzeugung basierend auf Bordmultikamera nach einem der Ansprüche 1 bis 12 zu implementieren.

15. Computerprogrammprodukt (1221), wobei das Computerprogrammprodukt (1221), wenn es auf einem Bordgerät (1200) ausgeführt wird, das Bordgerät (1200) in die Lage versetzt, das Verfahren zur Videoerzeugung basierend auf Bordmultikamera nach einem der Ansprüche 1 bis 12 auszuführen.

**Revendications**

1. Procédé pour la génération de vidéo sur la base de multiples caméras embarquées, le procédé comprenant :

(S201) l'obtention de données vidéo qui sont collectées séparément par de multiples caméras embarquées qui sont installées selon différentes orientations sur un véhicule, dans lequel chacune des caméras embarquées est configurée pour collecter des données vidéo à partir d'une orientation en correspondance ;
(S202) l'extraction d'une ou de plusieurs séquences vidéo à traiter à partir des données vidéo de chaque orientation en :

- (S2021) déterminant une caméra principale parmi les multiples caméras embarquées selon différentes orientations en :

- - (S211) obtenant une information de navigation cartographique du véhicule pendant un processus de conduite du véhicule ; en
- - (S212) identifiant une localisation clé qui est rencontrée pendant le processus de conduite sur la base de l'information de navigation cartographique ; et en

- - (S213) déterminant la caméra principale parmi les multiples caméras embarquées sur la base d'une direction de conduite du véhicule et de la localisation clé, dans lequel les données vidéo qui sont collectées par la caméra principale sont les données vidéo qui sont capturées par la caméra principale pour la localisation clé ; en

- (S2022) extrayant une ou plusieurs séquences vidéo principales à partir des données vidéo qui sont collectées par la caméra principale, dans lequel chacune des séquences vidéo principales présente une information de temps correspondante ; et en

- (S2023) extrayant respectivement une ou plusieurs séquences vidéo auxiliaires présentant l'information de temps à partir des données vidéo qui sont collectées par d'autres caméras embarquées à l'exception de la caméra principale, dans lequel les séquences vidéo comprennent les séquences vidéo principales et les séquences vidéo auxiliaires ;

(S203) la détermination de zones d'affichage des données vidéo à partir de chaque orientation dans une vidéo cible à générer ; et
(S204) la combinaison de multiples séquences vidéo en provenance de multiples orientations sur la base des zones d'affichage afin de générer la vidéo cible.

2. Procédé selon la revendication 1, dans lequel ladite extraction (S2023) respectivement des une ou plusieurs séquences vidéo auxiliaires présentant l'information de temps à partir des données vidéo qui sont collectées par les autres caméras embarquées à l'exception de la caméra principale comprend :

(S231) la détermination respectivement d'estampilles temporelles d'une image vidéo de début et d'une image vidéo de fin pour chaque séquence vidéo principale sur la base de l'information de temps afin d'obtenir une séquence d'estampilles temporelles ;
(S232) le marquage de la séquence d'estampilles temporelles dans les données vidéo qui sont collectées par les autres caméras embarquées à l'exception de la caméra principale ; et
(S233) la détermination séquentielle de séquences vidéo à extraire à partir des données vidéo qui sont marquées avec la séquence d'estampilles temporelle et l'extraction des séquences vidéo à extraire afin d'obtenir les une ou plusieurs séquences vidéo auxiliaires présentant l'information de temps.

3. Procédé selon la revendication 1 ou 2, dans lequel ladite détermination (S203) des zones d'affichage des données vidéo à partir de chaque orientation dans la vidéo cible à générer comprend :

la réception d'un modèle de vidéo qui est sélectionné pour la vidéo cible à générer, dans lequel le modèle de vidéo comprend de multiples zones de modèle, et les zones de modèle présentent respectivement une relation de lien vis-à-vis de la caméra embarquée selon différentes orientations sur le véhicule ; et
la détermination des zones d'affichage des données vidéo à partir de chaque orientation dans la vidéo cible à générer sur la base de relations de lien entre les caméras embarquées selon différentes orientations et des zones de modèle.

4. Procédé selon la revendication 3, dans lequel ladite combinaison (S204) des multiples séquences vidéo en provenance des multiples orientations sur les zones d'affichage afin de générer la vidéo cible comprend :
la lecture, dans chacune des zones d'affichage, d'une ou de plusieurs séquences vidéo qui sont extraites à partir des données vidéo qui sont collectées par la caméra embarquée selon une orientation en correspondance afin de générer la vidéo cible.

5. Procédé selon l'une quelconque des revendications 1 ou 2 ou 4, dans lequel, après la combinaison (S204) des multiples séquences vidéo en provenance des multiples orientations sur la base des zones d'affichage afin de générer la vidéo cible, le procédé comprend en outre :

l'ajout d'effets vidéo à la vidéo cible ;
dans lequel les effets vidéo comprennent au moins l'un des traitements suivants :
l'ajout d'une musique de fond sonore, la modification du style de la vidéo, l'ajout de matériaux autocollants, l'application de filtres à l'image vidéo et le remplacement de l'information ou du contexte météorologique.

6. Procédé selon la revendication 1, dans lequel, avant la combinaison (S204) des multiples séquences vidéo en provenance des multiples orientations sur la base des zones d'affichage afin de générer la vidéo cible, le procédé comprend en outre :

l'identification et la comparaison d'une clarté de la vidéo des multiples séquences vidéo ; et
la réalisation d'un traitement de correction de flou sur les séquences vidéo sur la base d'un résultat d'identification et de comparaison et en combinaison avec une information de véhicule particulière, afin d'assurer que la clarté de la vidéo des multiples séquences vidéo satisfait des conditions prédéfinies.

7. Procédé selon la revendication 6, dans lequel lesdites identification et comparaison de la clarté de la vidéo des multiples séquences vidéo comprennent :

la réalisation d'une comparaison de clarté sur un segment de vidéo cible et sur une vidéo d'une clarté prédéfinie afin d'obtenir un résultat d'identification et de comparaison, dans lequel le segment de vidéo cible est n'importe quel segment de vidéo des multiples séquences vidéo, et le résultat d'identification et de comparaison comprend une relation entre la clarté du segment de vidéo cible et la clarté prédéfinie ;

la détermination, si la clarté du segment de vidéo cible est inférieure à la clarté prédéfinie, d'un facteur qui affecte la clarté du segment de vidéo cible ; et

la réalisation en correspondance, si le facteur qui affecte la clarté du segment de vidéo cible est l'information de véhicule particulière, du traitement de correction de flou sur les séquences vidéo sur la base du résultat d'identification et de comparaison et en combinaison avec l'information de véhicule particulière afin d'assurer que la clarté de la vidéo des multiples séquences vidéo satisfait les conditions prédéfinies.

8. Procédé selon la revendication 6, dans lequel lesdites identification et comparaison de la clarté de la vidéo des multiples séquences vidéo comprennent :

la réalisation d'une comparaison de clarté sur un segment de vidéo cible et sur une vidéo d'une clarté prédéfinie afin d'obtenir un premier résultat de comparaison, dans lequel le segment de vidéo cible est n'importe quel segment de vidéo des multiples séquences vidéo, et le premier résultat de comparaison comprend une relation entre la clarté du segment de vidéo cible et la clarté prédéfinie ;

la sélection de multiples segments de vidéo cibles présentant une même séquence d'estampilles temporelles mais dans des zones d'affichage différentes ; et

la réalisation d'une comparaison, quant à la clarté, de la vidéo de n'importe quels deux segments de vidéo cibles des multiples segments de vidéo cibles sélectionnés afin d'obtenir un second résultat de comparaison, dans lequel le second résultat de comparaison comprend une relation de la clarté de la vidéo entre les deux segments de vidéo cibles, et le résultat d'identification et de comparaison comprend le premier résultat de comparaison et le second résultat de comparaison.

9. Procédé selon la revendication 7, dans lequel l'information de véhicule particulière comprend une vitesse de véhicule, une information de localisation de véhicule et une dimension d'affichage d'interface ; ladite réalisation du traitement de correction de flou sur les séquences vidéo sur la base du résultat d'identification et de comparaison et en combinaison avec l'information de véhicule particulière afin d'assurer que la clarté de la vidéo des multiples séquences vidéo satisfait les conditions prédéfinies comprend :

l'obtention d'un modèle de correction de flou de vidéo sur la base de la vitesse de véhicule du véhicule lors de la collecte du segment de vidéo cible, de l'information de localisation de véhicule et de la dimension d'affichage d'interface d'une zone d'affichage qui correspond au segment de vidéo cible, dans lequel des relations de correspondance entre différentes vitesses de véhicule, différentes informations de localisation de véhicule, différentes dimensions d'affichage d'interface et différents modèles de correction de flou de vidéo sont pré-stockées ; et

l'entrée du résultat d'identification et de comparaison et de l'information de véhicule particulière à l'intérieur d'un modèle de correction de flou de vidéo pré-entraîné afin de réaliser un traitement de correction de flou sur le segment de vidéo cible dans les séquences vidéo, afin d'assurer que la clarté de la vidéo des multiples séquences vidéo satisfait les conditions prédéfinies.

10. Procédé selon la revendication 7, dans lequel l'information de véhicule particulière comprend une vitesse de véhicule, une information de localisation de véhicule et une dimension d'affichage d'interface ; ladite réalisation du traitement de correction de flou sur les séquences vidéo sur la base du résultat d'identification et de comparaison et en combinaison avec l'information de véhicule particulière afin d'assurer que la clarté de la vidéo des multiples séquences vidéo satisfait les conditions prédéfinies comprend :

pour chaque segment de vidéo cible dans les multiples séquences vidéo, la réalisation des opérations suivantes : la détermination d'un premier modèle de correction de flou de vidéo qui correspond à la vitesse de véhicule sur la base de la vitesse de véhicule du véhicule lors de la collecte du segment de vidéo cible et la réalisation d'un traitement de correction de flou sur le segment de vidéo cible en utilisant le premier modèle de correction de flou de vidéo afin d'obtenir un premier segment de vidéo, dans lequel une relation de correspondance entre différentes vitesses de véhicule et différents modèles de correction de flou de vidéo est pré-stockée ; la détermination d'un deuxième modèle de correction de flou de vidéo qui correspond à l'information de localisation de véhicule lors de la collecte du segment de vidéo cible et la réalisation d'un traitement de correction de flou sur le segment de vidéo cible en utilisant le deuxième modèle de correction de flou de vidéo afin d'obtenir un deuxième segment de vidéo, dans lequel une relation de correspondance entre différentes informations de localisation de véhicule et différents modèles de correction de flou de vidéo est pré-stockée ; la détermination d'un troisième modèle de correction de flou de vidéo qui correspond à la dimension d'affichage d'interface sur la base de la dimension d'affichage d'interface d'une zone d'affichage qui correspond au segment de vidéo cible et la réalisation d'un traitement de correction de flou sur le segment de vidéo cible en utilisant le troisième modèle de correction de flou de vidéo afin d'obtenir un troisième segment de vidéo, dans lequel une relation de correspondance entre différentes dimensions d'interface et différents modèles de correction de flou de vidéo est pré-stockée ; et la détermination d'un segment de vidéo qui présente une clarté la plus élevée parmi le premier segment de vidéo, le deuxième segment de vidéo et le troisième segment de vidéo, et le segment de vidéo qui présente la clarté la plus élevée est le segment de vidéo cible qui satisfait les conditions prédéfinies.

11. Procédé selon la revendication 1, dans lequel ladite détermination de la caméra principale parmi les multiples caméras embarquées selon différentes orientations comprend : la détermination de la caméra principale parmi les multiples caméras embarquées sur la base d'un contenu réel en termes de vidéo qui est capturé par chacune des caméras embarquées.

12. Procédé selon la revendication 1, dans lequel ladite détermination de la caméra principale parmi les multiples caméras embarquées sur la base de la direction de conduite du véhicule et de la localisation clé comprend : la désignation d'une caméra embarquée qui peut capturer la localisation clé en tant que caméra principale pour le véhicule au niveau de cette localisation sur la base de la direction de conduite du véhicule et de la localisation clé.

13. Composant d'équipement embarqué (1200), comprenant une mémoire (1220), un processeur (1210) et un programme informatique (1221) qui est stocké dans la mémoire (1220) et qui peut être exécuté par le processeur (1210), dans lequel le processeur (1210), lorsqu'il exécute le programme informatique (1221), est configuré pour mettre en œuvre le procédé pour la génération de vidéo sur la base de multiples caméras embarquées selon l'une quelconque des revendications 1 à 12.

14. Support de stockage lisible par ordinateur stockant un programme informatique (1221), dans lequel le programme informatique (1221), lorsqu'il est exécuté par un processeur (1210), force le processeur (1210) à mettre en œuvre le procédé pour la génération de vidéo sur la base de multiples caméras embarquées selon l'une quelconque des revendications 1 à 12.

15. Produit de programme informatique (1221), dans lequel le produit de programme informatique (1221), lorsqu'il est déroulé sur un composant d'équipement embarqué (1200), permet que l'équipement embarqué (1200) exécute le procédé pour la génération de vidéo sur la base de multiples caméras embarquées selon l'une quelconque des revendications 1 à 12.

| Input Video | → | Content Understanding | → | Special Effects Addition | → | Video Generation |
| --- | --- | --- | --- | --- | --- | --- |

Scene Classification
Aesthetic Evaluation
Significant Area Detection
Highlight Extraction
......

Sticker Material
Style Transfer
Sky Replacement
......

FIG. 1

Obtaining video data collected separately by multiple on-board cameras installed in different orientations on a vehicle, where each of the on-board cameras is configured to collect video data from a corresponding orientation — S201

Extracting one or more video sequences to be processed from the video data of each orientation — S202

Determining display areas of the video data from each orientation in a target video to be generated — S203

Combining multiple video sequences from multiple orientations based on the display areas to generate the target video — S204

FIG. 2

| Input Video | → | Content Understanding | → | On-board Multi-camera Video Data Processing | → | Special Effects Addition | → | Video Generation |
| --- | --- | --- | --- | --- | --- | --- | --- | --- |

Scene Classification
Aesthetic Evaluation
Significant Area Detection
Highlight Extraction
......

Video data collected by multiple on-board cameras are processed by utilizing positional relationship and map navigation information of the on-board cameras

Sticker Material
Style Transfer
Sky Replacement
......

FIG. 3

Determining a main camera among the multiple on-board cameras in different orientations — S2021

Extracting one or more main video sequences from the video data collected by the main camera, where each of the main video sequences has corresponding time information — S2022

Extracting respectively one or more auxiliary video sequences having the time information from the video data collected by other on-board cameras except the main camera, where the video sequences comprise the main video sequences and the auxiliary video sequence — S2023

FIG. 4

Obtaining map navigation information of the vehicle during a driving process of the vehicle — S211

Identifying a key location encountered during the driving process based on the map navigation information — S212

Determining the main camera from the multiple on-board cameras based on a driving direction of the vehicle and the key location, where the video data collected by the main camera is the video data captured by the main camera for the key location — S213

FIG. 5

FIG. 6

0S  5S        13S        27S                      3527S        3600S

FIG. 7

Determining respectively timestamps of a start video frame and an end video frame for each main video sequence based on the time information to obtain a timestamp sequence    S231

Marking the timestamp sequence in the video data collected by the other on-board cameras except the main camera    S232

Sequentially determining video sequences to be extracted from the video data marked with the timestamp sequence and extracting the video sequences to be extracted to obtain the one or more auxiliary video sequences having the time information    S233

FIG. 8

Time1    Time3    TimeN-1

• • • • • •

Time2    Time4    TimeN

FIG. 9

| Area I | Area III | Area II |
| | Area IV | |

FIG. 10

Device for Video Generation Based on On-Board
Multi-Camera

Video Data Acquisition
Module ⟋ 1101

Video Sequence Extraction
Module ⟋ 1102

Display Area Determination
Module ⟋ 1103

Target Video Generation
Module ⟋ 1104

FIG. 11

1200⁓

1210⁓

Memory

1220 ⟋ 1221⁓

Computer
Program

Processor

On-Board
Equipment

FIG. 12

**EP 4 468 719 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014354816 A1